**Europäisches Patentamt**

(19) **European Patent Office**

**Office européen des brevets**

(11) Numéro de publication: **0 102 264**
**B1**

(12) **FASCICULE DE BREVET EUROPEEN**

(45) Date de publication du fascicule du brevet:
**13.05.87**

(51) Int. Cl.⁴: **H 04 J 15/00**, G 02 B 6/28,
G 02 B 6/34

(21) Numéro de dépôt: **83401451.6**

(22) Date de dépôt: **13.07.83**

(54) **Dispositif à isolement optique pour multiplexage ou démultiplexage de longueurs d'onde.**

(30) Priorité: **16.07.82 FR 8212438**

(43) Date de publication de la demande:
**07.03.84 Bulletin 84/10**

(45) Mention de la délivrance du brevet:
**13.05.87 Bulletin 87/20**

(84) Etats contractants désignés:
**AT BE CH DE FR GB IT LI LU NL SE**

(56) Documents cités:
**EP - A - 0 037 787**
**EP - A - 0 040 706**
**EP - A - 0 050 555**
**FR - A - 2 433 864**
**FR - A - 2 500 642**
**GB - A - 2 086 168**

**ELECTRONICS LETTERS, vol. 16, no. 23, novembre 1980, pages 869-870, Londres, GB. T. TANAKA et al.: "Simple structure high isolation multi/demultiplexer" PATENTS ABSTRACTS OF JAPAN, vol. 6, no. 38, (P-105)[916], 9 mars 1982**

(73) Titulaire: **INSTRUMENTS S.A., 25, avenue de l'Opéra, F-75001 Paris (FR)**

(72) Inventeur: **Laude, Jean-Pierre, Rue des Graveriots Saint Cyr La Rivière, F-91690 Saclas (FR)**

(74) Mandataire: **Phélip, Bruno et al, c/o Cabinet Harlé & Phélip 21, rue de la Rochefoucauld, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif à isolement optique pour multiplexage ou démultiplexage de longueurs d'ondes dans une fibre optique de transmission, plus particulièrement destiné à constituer un composant d'extrémité dans une installation de télécommunication par fibres optiques.

Dans une telle installation chaque information est émise sous la forme d'une lumière modulée, puis introduite à l'extrémité d'une fibre optique de transmission, puis recueillie à son autre extrémité pour être captée par un récepteur qui reconstitue l'information. On rencontre alors les problèmes d'aberrations principalement pour faire entrer dans la fibre la lumière en provenance de l'émetteur car on utilise le plus souvent, pour le bon rendement de la transmission, des fibres dont le diamètre de cœur est de l'ordre de 5 à 50 μm; toutes les aberrations qui conduisent à former sur la face d'entrée de la fibre une image de l'émetteur de plus grande surface que celle du cœur de la fibre entrainent donc une perte de lumière et une cause importante d'affaiblissement du signal recueilli à l'autre extrémité.

En outre, les installations de télécommunication par fibres optiques doivent généralement être prévues pour la transmission d'informations dans les deux sens. Les composants d'extrémités servent alors à la fois à introduire dans la fibre au moins un signal en provenance d'au moins un émetteur situé à la même extrémité de la fibre, et à extraire et séparer les signaux en provenance des émetteurs situés à l'autre extrémité. Il en résulte une certaine «diaphonie», car des parasites optiques créés dans le composant par la lumière puissante des émetteurs proches peuvent cheminer dans le composant jusqu'aux récepteurs. Ces récepteurs sont prévus pour travailler à des niveaux optiques très faibles car les signaux qu'ils reçoivent normalement sont très atténués par un long parcours dans la fibre de transmission et sont donc très sensibles à toute lumière parasite. La lumière parasite en provenance de l'émetteur et susceptible d'atteindre anormalement les récepteurs peut résulter par exemple d'une très légère réflexion sur la face d'entrée de la fibre ou d'un retour par cette fibre d'une réflexion survenue plus en aval; elle peut encore provenir d'une diffusion générale dans le milieu optique en raison d'imperceptibles défauts d'homogénéité ou d'isotropie de ce milieu.

Pour une bonne efficacité un composant d'extrémité doit donc à la fois permettre la pleine transmission sur la fibre de la lumière en provenance de chaque émetteur, et éviter toute déviation parasite de cette lumière vers les récepteurs qui ne doivent recueillir que la lumière en provenance des émetteurs de l'autre extrémité de la fibre.

FR-A-2 433 864 décrit un dispositif de communication par fibres optiques et notamment un dispositif de transmission bidirectionnel à fibre optique dans lequel il est prévu deux milieux d'isolement optique et l'interposition d'un filtre.

Electronics letters, vol. 16, n° 23, 1980, pages 869–870, décrit un dispositif à isolement optique pour multiplexage ou démultiplexage de longueurs d'onde dans une fibre optique de transmission, destiné à être utilisé à une extrémité de la fibre pour y faire pénétrer une lumière en provenance d'un émetteur et en extraire et séparer, vers au moins un récepteur, au moins une lumière en provenance d'un émetteur situé à l'autre extrémité de la fibre de transmission. Dans un tel dispositif toutes les fibres sont disposées à l'extrémité d'un même milieu (g.r.i.n., lentille à gradient d'indice).

EP-A-O 050 555 décrit un dispositif multiplexeur-démultiplexeur de longueurs d'onde dans une fibre optique de transmission, destiné à être utilisé à une extrémité de la fibre pour y faire pénétrer une lumière en provenance d'un émetteur, et/ou en extraire et séparer vers des récepteurs, des lumières en provenance d'émetteurs, situés à l'autre extrémité de la fibre de transmission. Ce dispositif comporte un miroir concave sélectif pour séparer deux plages particulières de longueurs d'onde. La présente invention a pour objet un dispositif à isolement optique pour multiplexage ou démultiplexage de longueurs d'ondes dans une fibre optique de transmission, destiné à être utilisé à une extrémité de la fibre pour y faire pénétrer une lumière en provenance d'un émetteur, et en extraire et séparer, vers au moins un récepteur, au moins une lumière en provenance d'un émetteur situé à l'autre extrémité de la fibre de transmission, caractérisé en ce qu'il comporte deux milieux optiques séparés par un miroir filtre à couches multidiélectriques, la liaison émetteur-fibre étant réalisée dans l'un des milieux tandis que la séparation vers les différents récepteurs est réalisée dans l'autre milieu, l'extrémité de la fibre de transmission et l'extrémité de la fibre de liaison avec l'émetteur étant disposées à l'extrémité d'un premier bloc de matériau transparent constituant le premier milieu optique, en positions conjuguées au voisinage du centre de courbure d'un premier miroir concave sélectif à couches multidiélectriques formant l'autre extrémité du premier bloc, de façon à réaliser un couplage stigmatique de la fibre de l'émetteur vers la fibre de transmission, le premier miroir concave sélectif étant déterminé de façon à être réfléchissant pour au moins les longueurs d'onde de l'émetteur et à laisser passer les longueurs d'ondes en provenance des émetteurs situés à l'autre extrémité de la fibre de transmission et en ce que le deuxième milieu optique est constitué par un deuxième bloc transparent en prisme et comportant à la fois des moyens de déviation du faisceau ayant traversé le premier miroir sélectif, des moyens de séparation des différentes longueurs d'onde le constituant, et des moyens de focalisation des faisceaux séparés vers les récepteurs ou des fibres de liaison avec ces récepteurs.

Lorsque l'invention est appliquée au cas où l'extrémité de la fibre de transmission et l'extrémité de la fibre de liaison avec l'émetteur sont disposées à l'extrémité d'un premier bloc de matériau transparent constituant le premier milieu optique, en positions conjuguées au voisinage du centre de courbure d'un premier miroir concave sélectif à couches multidiélectriques formant l'autre extrémité du premier bloc, de façon à réaliser un couplage stigmatique de la fibre de l'émetteur vers la fibre de transmission, l'invention consiste en ce que le premier miroir concave sélectif est déterminé de façon à être réfléchissant pour au moins les longueurs d'onde de l'émetteur et à laisser passer les longueurs d'onde en provenance des émetteurs situés à l'autre extrémité de la fibre de transmission, et en ce que le deuxième milieu optique est constitué par un deuxième bloc transparent en prisme et comportant à la fois des moyens de déviation du faisceau ayant traversé le premier miroir sélectif, des moyens de séparation des différentes longueurs d'onde le constituant, et des moyens de focalisation des faisceaux séparés vers les récepteurs ou des fibres de liaison avec ces récepteurs.

Selon une variante de réalisation, les moyens de séparation des longueurs d'onde en provenance de la fibre de transmission, et de focalisation vers les fibres réceptrices, sont constitués par des miroirs concaves sélectifs de chaque bande de longueur d'onde à séparer, disposés en série avec leurs axes légèrement décalés angulairement, les fibres réceptrices étant disposées aux points conjugués de l'extrémité de la fibre de transmission par rapport aux miroirs sélectifs successifs, et les moyens de déviation sont constitués par un système réfléchissant plan formé sur une face de deuxième bloc prismatique, les extrémités des fibres réceptrices étant disposées dans une zone centrale non réfléchissante réservée sur ce système réfléchissant plan.

Selon une autre variante de réalisation, les moyens de déviation sont constitués par une surface concave de réfraction disposée en avant des miroirs concaves de séparation, les extrémités des fibres réceptrices étant disposées au voisinage du centre de la surface de réfraction et les miroirs concaves de séparation disposés de façon à y focaliser le faisceau réfracté.

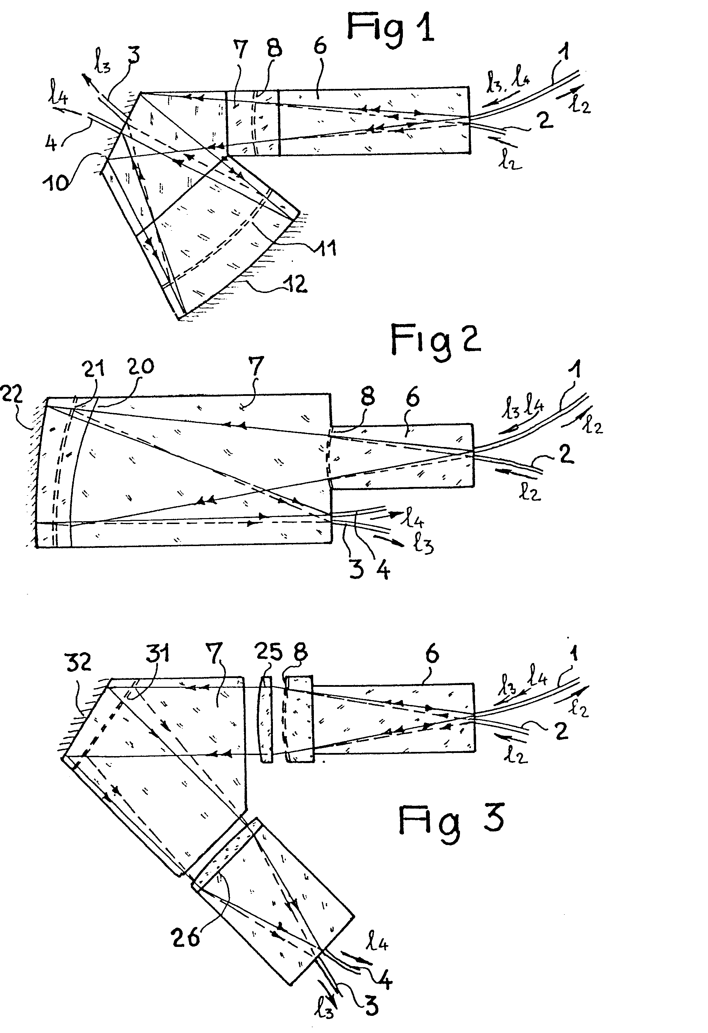

L'invention sera mieux comprise en se référant à des modes de réalisation particuliers donnés à titre d'exemple et représentés par les dessins annexés, qui sont tous des schémas optiques simplifiés. Les figures 1 et 2 représentent des configurations dans lesquelles la séparation des différentes longueurs d'onde reçues et leur focalisation vers les fibres réceptrices respectives est obtenue par des miroirs concaves sélectifs. Pour le dispositif de la figure 1 la déviation du faisceau issu de la fibre de transmission est réalisé par un miroir plan; pour le dispositif de la figure 2 elle est réalisée par une surface de réfraction sphérique.

La figure 3 représente une configuration dans laquelle la séparation des longueurs d'onde reçues est obtenue par des miroirs plans sélectifs, après collimation dans le deuxième milieu et avant focalisation des faisceaux séparés.

En se référant tout d'abord à la figure 1, le dispositif représenté est lié à la fibre de transmission 1 à la fois pour y introduire, par l'intermédiaire de la fibre 2, le signal lumineux de longueur d'onde $1_2$ issu d'un émetteur-modulateur non représenté, et pour recueillir sur les fibres réceptrices 3 et 4 les signaux portés par des lumières de longueurs d'onde $1_3$ et $1_4$ en provenance d'émetteurs situés à l'autre extrémité de la fibre 1. Le dispositif comporte deux milieux transparents 6 et 7 séparés par un miroir concave sphérique sélectif 8, constitué par la superposition sur le milieu transparent d'une succession de couches minces, d'épaisseur de l'ordre du quart de la longueur d'onde de la lumière concernée, et alternativement en matériaux de fort et de faible indice, comme par exemple du sulfure de zinc et de la cryolithe. Ici le nombre et les épaisseurs des couches élémentaires sont déterminées pour que le miroir 8 ainsi constitué ne réfléchisse qu'une bande de longueurs d'onde contenant $1_2$ tandis qu'il reste transparent sans déviation pour les autres longueurs d'onde, et en particulier les longueurs d'onde $1_3$ et $1_4$.

Les extrémités des fibres 1 et 2 sont appliquées sur le bloc 6 au voisinage immédiat et de part et d'autre du centre de courbure du miroir sphérique 8, de telle sorte que l'image de l'extrémité de la fibre 2 dans le miroir 8 correspond sans aberration sensible à l'extrémité de la fibre 1; la totalité de la lumière $1_2$ issue de la fibre 2 se retrouve donc dans la fibre de transmission 1.

Par ailleurs, le faisceau de lumière $1_3\,1_4$ issu de l'extrémité de la fibre 1 traverse sans déviation le miroir 8 pour parvenir dans le milieu 7 où il rencontre le miroir plan 10 dont une petite zone centrale n'est pas réfléchissante. L'essentiel du faisceau $1_3\,1_4$ est donc réfléchi vers un miroir concave 11 sélectif à couches multidiélectriques et vers un autre miroir concave 12 qui peut être totalement réfléchissant. Les caractéristiques du miroir 11 sont déterminées pour qu'il réfléchisse une bande de longueurs d'onde contenant $1_3$, tandis qu'il est transparent pour les autres y compris $1_4$. Dans ces conditions la lumière $1_3$ est focalisée par le miroir 11 sur l'extrémité de la fibre 3 tandis que la lumière $1_4$ traverse le miroir 11 pour être focalisée par le miroir 12 sur l'extrémité de la fibre 4, en traversant à nouveau sans déviation le miroir 11.

Les fibres 3 et 4 sont disposées dans la zone centrale non réfléchissante du miroir 10.

On notera que dans le dispositif qui vient d'être décrit toute la lumière de forte intensité $1_2$ en provenance de l'émetteur proche est complètement isolée dans le milieu 6 par le miroir 8 qui la réfléchit entièrement, qu'il s'agisse de la lumière en provenance directe de la fibre 2, ou de la lumière parasite par réflexion ou par diffusion. Le milieu 7 dans lequel s'effectue la séparation des longueurs d'onde reçues et leurs focalisations vers les fibres réceptrices 3 et 4 est donc totalement isolé du milieu émetteur 6 et de ses parasites, et les lumières $1_3$ et $1_4$ même très atténuées ne seront pas perturbées par des pertes incontrôlées de $1_2$.

Bien entendu, si la disposition générale de l'installation le permet, les détecteurs des lumières $1_3$ et $1_4$ pourraient être disposés directement dans la zone centrale du miroir 10, à la place des fibres 3 et 4.

On pourra aussi noter que le miroir 10 pourrait être remplacé par un réseau plan de diffraction; on obtiendrait alors une dispersion de lumière dans le plan de sortie, avec possibilité de démultiplexer un plus grand nombre de longueurs d'onde vers un ensemble de détecteurs.

On se référera maintenant à la figure 2 qui présente une structure générale comparable à la précédente, mais plus compacte. On y retrouve la fibre de transmission 1 qui doit recueillir la lumière $1_2$ venant d'un émetteur proche par la fibre de liaison 2. La fibre 1 amène les lumières $1_3$ et $1_4$ qui doivent être recueillies par les fibres 3 et 4 vers des détecteurs. Comme à la figure 1 le miroir concave sélectif 8 réfléchit entièrement vers 1 la lumière venant de 2 et protège complètement le reste du dispositif de toute pénétration de lumière $1_2$, directe ou diffuse.

Le faisceau $1_3$ $1_4$ issu de l'extrémité de la fibre 1 traverse sans déviation le miroir 8 pour parvenir dans le milieu 7 où il rencontre la surface sphérique 20 séparant deux milieux d'indices différents et qui dévie le faisceau par réfraction. Le faisceau réfracté, en provenance de l'image virtuelle de l'extrémité de la fibre 1 par rapport à la surface 20, rencontre d'abord le miroir concave sélectif 21 à couches multidiélectriques qui ne réfléchit qu'une bande de longueurs d'onde contenant $1_3$ tandis qu'il est transparent pour les autres, y compris $1_4$; ces dernières atteignent le second miroir 22 qui peut être entièrement réfléchissant. Les miroirs 21 et 22 sont déterminés de façon à focaliser les faisceaux réfléchis sensiblement vers le centre de la surface 20 de façon à ne pas subir de nouvelle déviation lors de sa traversée. La lumière $1_3$, réfléchie par 21 vient sur l'entrée de la fibre 3 tandis que la lumière $1_4$, réfléchie par 22 est captée par la fibre 4. Ici encore les fibres 3 et 4 pourraient être remplacées par les détecteurs eux-mêmes, disposés au voisinage immédiat du centre de la surface 20.

Dans la version représentée à la figure 3 on retrouve le miroir sélectif 8 qui empêche toute propagation de 2 la lumière $1_2$ vers les zones où le faisceau $1_3$ $1_4$ sera dévié et séparé après sa traversée sans déviation du miroir 8. Mais ici la déviation et la séparation du faisceau sont réalisés par deux miroirs plans 31 et 32 après que le faisceau ait été rendu parallèle par la lentille 25. Le miroir 31 est à couches diélectriques déterminées pour ne réfléchir qu'une bande de longueurs d'onde contenant $1_3$ et laisser passer $1_4$ qui est réfléchie par le miroir 32 formant un léger angle avec 31. Les deux faisceaux parallèles réfléchis formant entre eux un léger angle, sont séparément focalisés par la lentille 26 sur les extrémités des fibres 3 et 4.

## Revendications

1. Dispositif à isolement optique pour multiplexage ou démultiplexage de longueurs d'ondes dans une fibre optique de transmission (1), destiné à être utilisé à une extrémité de la fibre pour y faire pénétrer une lumière en provenance d'un émetteur, et en extraire et séparer, vers au moins un récepteur, au moins une lumière en provenance d'un émetteur situé à l'autre extrémité de la fibre de transmission, caractérisé en ce qu'il comporte deux milieux optiques (6, 7) séparés par un miroir filtre (8) à couches multidiélectriques, la liaison émetteur-fibre étant réalisée dans l'un des milieux (6) tandis que la séparation vers les différents récepteurs est réalisée dans l'autre milieu (7), l'extrémité de la fibre de transmission (1) et l'extrémité de la fibre de liaison (2) avec l'émetteur étant disposées à l'extrémité d'un premier bloc (6) de matériau transparent constituant le premier milieu optique, en positions conjuguées au voisinage du centre de courbure d'un premier miroir concave sélectif (8) à couches multidiélectriques formant l'autre extrémité du premier bloc, de façon à réaliser un couplage stigmatique de la fibre (2) de l'émetteur vers la fibre de transmission (1), le premier miroir concave sélectif (8) étant déterminé de façon à être réfléchissant pour au moins les longueurs d'onde de l'émetteur et à laisser passer les longueurs d'ondes en provenance des émetteurs situés à l'autre extrémité de la fibre de transmission et en ce que le deuxième milieu optique (7) est constitué par un deuxième bloc transparent en prisme et comportant à la fois des moyens de déviation du faisceau ayant traversé le premier miroir sélectif, des moyens de séparation des différentes longueurs d'onde le constituant, et des moyens de focalisation des faisceaux séparés vers les récepteurs ou des fibres de liaison avec ces récepteurs.

2. Dispositif selon la revendication 1, caractérisé en ce que les moyens de séparation des longueurs d'onde en provenance de la fibre de transmission, et de focalisation vers les fibres receptrices, sont constitués par des miroirs concaves (11, 12–21, 22) sélectifs de chaque bande de longueur d'onde à séparer, disposés en série avec leurs axes légèrement décalés angulairement, les fibres réceptrices (3, 4) étant disposées aux points conjugués de l'extrémité de la fibre de transmission (1) par rapport aux miroirs sélectifs successifs.

3. Dispositif selon la revendication 1, caractérisé en ce que les moyens de déviation sont constitués par un système réfléchissant plan (10) formé sur une face du deuxième bloc prismatique (7), les extrémités des fibres réceptrices (3, 4) étant disposées dans une zone centrale non réfléchissante réservée sur ce système réfléchissant plan (10).

4. Dispositif selon la revendication 1, caractérisé en ce que le système réfléchissant plan (10) est un miroir plan.

5. Dispositif selon la revendication 1, caractérisé en ce que le système réfléchissant plan (10) est un réseau de diffraction plan.

6. Dispositif selon la revendication 1, caractérisé en ce que les moyens de déviation sont constitués par une surface concave de réfraction (20) disposée en avant des miroirs concaves de séparation (21, 22), les extrémités des fibres réceptrices (3, 4) étant disposées au voisinage du centre de la surface de réfraction (20) et les miroirs concaves de séparation (20, 21) disposés de façon à y focaliser le faisceau réfracté.

7. Dispositif selon la revendication 1, caractérisé en ce que les moyens de déviation du faisceau ayant traversé le premier miroir sélectif (8), et de séparation des longueurs d'onde en provenance de la fibre de transmission, sont constitués par des miroirs plans (31, 32) sélectifs de chaque bande de longueur d'onde à séparer, disposés en série et légèrement décalés angulairement, des moyens de collimation (25) et de focalisation (26) étant disposés respectivement sur le faisceau incident reçu par les miroirs plans (31, 32) et sur les faisceaux réfléchis par ces miroirs plans.

## Patentansprüche

1. Optische Trennvorrichtung zur Multiplexierung oder Demultiplexierung von Wellenlängen in einer optischen Übertragungsfaser (1), wobei die Vorrichtung zum Anschliessen an das eine Ende der Faser, um dort eine Lichtmenge aus einem Sender eintreten zu lassen, und zum Extrahieren und Trennen wenigstens einer Lichtmenge für mindestens einen Empfänger aus einem an dem anderen Ende der Übertragungsfaser vorhandenen Sender bestimmt ist, dadurch gekennzeichnet, dass sie zwei optische Medien (6, 7) aufweist, die durch ein Filterspiegel (8) mit multidielektrischen Schichten getrennt sind, dass die Verbindung zwischen Sender und Faser in dem einen Medium (6) hergestellt ist, während die Trennung für die verschiedenen Empfänger in dem anderen Medium (7) verwirklicht ist, dass das Ende der Übertragungsfaser (1) und das Ende der Verbindungsfaser (2) mit dem Sender am Ende eines ersten Blockes (6) aus transparentem Material, der das erste optische Medium bildet, an konjugierten Stellen in Nähe des Krümmungszentrums eines ersten konkaven Selektivspiegels (8) mit multidielektrischen Schichten, der das andere Ende des ersten Blockes bildet, derart angeordnet sind, dass eine stigmatische Kupplung der Faser (2) des Senders mit der Übertragungsfaser (1) hergestellt ist, dass der erste konkave Selektivspiegel (8) derart ausgebildet ist, um für wenigstens die Wellenlängen des Senders reflektierend zu sein und um die Wellenlängen aus den am anderen Ende der Übertragungsfaser vorhandenen Sendern durchzulassen, und dass das zweite optische Medium (7) aus einem zweiten transparenten Block in Prismenform besteht und zugleich Ablenkmittel für das den ersten Selektivspiegel passierenden Strahlenbündel, Trennmittel der verschiedenen Wellenlängen des Bauteils und Mittel zum Fokussieren der getrennten Strahlenbündel auf die Empfänger oder auf die Verbindungsfasern dieser Empfänger aufweist.

2. Vorrichtung nach Anspruch 1, dadurch gekennzeichnet, dass die Mittel zum Trennen der Wellenlängen aus der Übertragungsfaser und die Mittel zum Fokussieren auf die Empfangsfasern aus konkaven Selektivspiegeln (11, 12) bzw. (21, 22) für jedes zu trennende Wellenlängenband bestehen, die hintereinander und mit ihren Achsen leicht winkelig versetzt angeordnet sind, und dass die Empfangsfasern (3, 4) an konjugierten Stellen am Ende der Übertragungsfaser (1) in Ausrichtung auf die aufeinanderfolgenden Selektivspiegel angeordnet sind.

3. Vorrichtung nach Anspruch 1, dadurch gekennzeichnet, dass die Ablenkmittel aus einem ebenen Reflektiersystem (10) bestehen, das auf einer Fläche des zweiten, prismatischen Blockes (7) gebildet ist, und dass die Enden der Empfangsfasern (3, 4) in einer nichtreflektierenden Zentralzone dieses ebenen Reflektiersystems (10) angeordnet sind.

4. Vorrichtung nach Anspruch 1, dadurch gekennzeichnet, dass das ebene Reflektiersystem (10) ein ebener Spiegel ist.

5. Vorrichtung nach Anspruch 1, dadurch gekennzeichnet, dass das ebene Reflektiersystem (10) ein Gitter mit ebener Beugung ist.

6. Vorrichtung nach Anspruch 1, dadurch gekennzeichnet, dass die Ablenkmittel aus einer konkaven Brechungsfläche (20) bestehen, die vor den konkaven Trennspiegeln (21, 22) angeordnet ist, dass die Enden der Empfangsfasern (3, 4) in Nähe des Zentrums der Brechungsfläche (20) angeordnet sind und dass die konkaven Trennspiegel (20, 21) derart angeordnet sind, um das gebrochene Bündel auf das genannte Zentrum zu fokussieren.

7. Vorrichtung nach Anspruch 1, dadurch gekennzeichnet, dass die Ablenkmittel für das den ersten Selektivspiegel (8) passierende Bündel und die Trennmittel für die Wellenlängen aus der Übertragungsfaser aus ebenen Selektivspiegeln (31, 32) für jedes zu trennende Wellenlängenband bestehen, die hintereinander und leicht winkelig versetzt angeordnet sind, und dass Kollimationsmittel (25) und Fokussiermittel (26) für das auf die ebenen Spiegel (31, 32) einfallend auftreffende Bündel bzw. für die von diesen ebenen Spiegeln reflektierten Bündel vorgesehen sind.

## Claims

1. Optical isolation device for wavelength multiplexing or demultiplexing in a transmission optical fibre (1), which device is intended to be utilized at one end of the fibre in order to cause an optical beam originating from an emitter to penetrate the fibre, and to extract therefrom and to separate, towards at least one receiver, at least one optical beam originating from an emitter situated at the other end of the transmission fibre, characterized in that it comprises two optical media (6, 7) separated by a filter mirror (8) provided with multi-dielectric coatings, the emitter-fibre junction being provided in one of the media (6) while the separation towards the various receivers is provided in the other medium (7), the end of the transmission fibre (1) and the end of the fibre providing the junction (2) with the emitter being disposed at the end of a first block (6) of transparent material constituting the first optical medium, in conjugate positions in the vicinity of the centre of curvature of a first selective concave mirror (8) provided with multi-dielectric coatings forming the other end of the first block, in such a manner as to provide a stigmatic coupling of the fibre (2) of the emitter to the transmission fibre (1), the first selective concave mirror (8) being specified in such a manner as to be reflecting for at least the wavelength of the emitter and to transmit the wavelengths originating from the emitters situated at the other end of the transmission fibre, and in that the second optical medium (7) is formed by a second transparent block in the form of a prism and including at the same time means for deviating the beam which has traversed the first selective mirror, means for separating the various wavelengths constituting that beam, and means for focusing the beams separated towards the receivers or fibres providing a junction with these receivers.

2. Device according to claim 1, characterized in that the means for separating the wavelengths originating from the transmission fibre and for focusing towards the receiving fibres comprise concave mirrors (11, 12–21, 22) which are selective in respect of each wavelength band to be separated and which are disposed in series with their axes slightly offset angularly, the receiving fibres (3, 4) being disposed at the conjugate points of the end of the transmission fibre (1) in relation to the successive selective mirrors.

3. Device according to claim 1, characterized in that the deviating means comprise a plane reflecting system (10) formed on a face of the second prismatic block (7), the ends of the receiving fibres (3, 4) being disposed in a non-reflecting central zone reserved on this plane reflecting system (10).

4. Device according to claim 1, characterized in that the plane reflecting system (10) is a plane mirror.

5. Device according to claim 1, characterized in that the plane reflecting system (10) is a plane diffraction grating.

6. Device according to claim 1, characterized in that the deviating means comprise a concave refracting surface (20) disposed in front of the concave separating mirrors (21, 22), the ends of the receiving fibres (3, 4) being disposed in the vicinity of the centre of the refracting surface (20) and the concave separating mirrors (20, 21) being disposed in such a manner as to focus there the retracted beam.

7. Device according to claim 1, characterized in that the means for deviating the beam which has traversed the first selective mirror (8), and for separating the wavelength originating from the transmission fibre, comprise plane mirrors (31, 32) which are selective in respect of each wavelength band to be separated and which are disposed in series and slightly offset angularly, means for collimation (25) and focusing (26) being disposed in the incident beam received by the plane mirrors (31, 32) and in the beams reflected by these plane mirrors respectively.

0 102 264

Fig 1

Fig 2

Fig 3